# EUROPEAN PATENT SPECIFICATION

(11) **EP 2 724 874 B1**
(45) Date of publication and mention of the grant of the patent: **15.08.2018**
(21) Application number: 13189495.8
(22) Date of filing: 21.10.2013
(51) Int. Cl.: B60C 23/12

(54) **Self-inflating tire and assembling method**
Selbstbefüllender Reifen und Montageverfahren
Pneu autogonflant et procédé d'assemblage

(30) Priority: 24.10.2012 US 201213659080; 24.10.2012 US 201213659105
(43) Date of publication of application: 30.04.2014
(73) Proprietor: The Goodyear Tire & Rubber Company, Akron, Ohio 44316 (US)
(72) Inventor: Benedict, Robert Leon, Tallmadge, OH Ohio 44278 (US); Gobinath, Thulasiram, Hudson, OH Ohio 44236 (US); Lin, Cheng-Hsiung, Hudson, OH Ohio 44236 (US); Lamgaday, Robin, Wadsworth, OH 44281 (US); Losey, Robert Allen, Kent, OH Ohio 44240 (US)
(74) Representative: Kutsch, Bernd

(56) References cited:
- EP-A1- 2 433 822
- EP-A2- 2 719 553
- US-A- 15 192
- US-A1- 2005 263 187

## Description

### Field of the Invention

The invention relates generally to a tire such as an air maintenance tire and an air maintenance system for a tire and, more specifically, to such a tire and systems that affix an air pump apparatus to a tire which maintains air pressure within the tire as the tire rotates. The invention also relates to a method of assembling an air pump for a tire which may be used in the manufacturing of such a tire.

### Background of the Invention

Normal air diffusion reduces tire pressure over time. The natural state of tires is under inflated. Accordingly, drivers must repeatedly act to maintain tire pressures or they will see reduced fuel economy, tire life and reduced vehicle braking and handling performance. Tire pressure monitoring systems have been proposed to warn drivers when tire pressure is significantly low. Such systems, however, remain dependent upon the driver taking remedial action when warned to re-inflate a tire to recommended pressure. It is a desirable, therefore, to incorporate a self-inflating feature within a tire that will self-inflate the tire in order to compensate for any reduction in tire pressure over time without the need for driver intervention. A prior art self-inflating tire (also called air maintenance tire) is described in EP-A-2 502 760.

EP-A-2 433 822 describes a tire in accordance with the preamble of claim 1.

US-A-15192 describes a tubular elastic vein valve.

US-A-2005/0263187 describes a check valve having barbs positioned in a tube.

EP-A-2 719 553, which is a European patent application falling within the terms of Art. 54(3) EPC, describes a self-inflating tire assembly having a tube integrated in the tire sidewall. The tube comprises several spaced check valves along the tube between segments of the tube.

### Summary of the Invention

The invention relates to a tire in accordance with claim 1 and to a method in accordance with claim 9.

Dependent claims refer to preferred embodiments of the invention.

The method of claim 9 may be used in the manufacturing of a tire in accordance with claim 1. Preferably, the tire is an air maintenance tire.
In a preferred aspect of the invention, an air maintenance tire and air pump assembly is provided including a tire; an elongate tubular air passageway enclosed
within a flexing region of a tire wall, the air passageway having an air inlet portal operable to admit air into the air passageway and an outlet portal spaced apart from the inlet portal operable to withdraw pressurized air from the air passageway, the air passageway operably closing segment by segment in reaction to induced forces from the tire flexing region as the flexing region of the tire wall rotates opposite to a rolling tire footprint. Multiple spaced apart check valve devices are seated within and along the axial air passageway, dividing the air passageway into multiple passageway segments. Each check valve device has an external dimension and configuration operable to substantially occupy the air passageway. A valve gate, such as a membrane, allows pressurized air to directionally pass through the check valve device from an upstream passageway segment to a downstream passageway segment. The valve gate in a closed position prohibits air from passing in an opposite direction through the check valve body from the downstream passageway segment to the upstream passageway segment.

In one preferred aspect of the invention, the air passageway may be configured as an integrally formed passageway within the tire sidewall or as an axial passage provided by a flexible air tube that is assembled to the tire in a post-cure procedure.

According to another preferred aspect of the invention, each check valve device is configured as a tubular body closely received within the air passageway, the tubular body having outwardly projecting retention barb(s) for securing the tubular body at a preferred location within the air passageway. The tubular body houses a flexible membrane member which serves as the valve gate. The membrane opens along a slit to admit pressurized air from one side of the check valve device to an opposite side.

The check valve devices, in another preferred aspect of the invention, may be positioned and spaced along a continuous air passageway extending between the inlet and outlet portals, or, alternatively, serve to connect air tube segments together in a splicing check valve configuration.

In a preferred aspect of the invention, the method of assembling an air pump for a tire may include: opening an axial air passageway of an elongate flexible air tube at one end; inserting one by one a plurality of one-way check valves into the air passageway from the one end to form an axial array of spaced apart check valves along the air passageway, each check valve having an external nominal width greater than a nominal width of the air tube passageway; establishing a press fit engagement between each check valve and air tube internal sidewalls defining the air passageway to place each check valve at a respective preferred position within the air passageway; retaining the check valves in the respective preferred positions within the air passageway by radial pressure from the air tube internal sidewalls and closing the one end of the flexible air tube.

In another preferred aspect of the invention, the method may include enlarging the flexible air tube diametrically from a non-enlarged diameter to an enlarged diameter prior to insertion of each of the plurality of check valves into the air passageway from the one air tube end; and sequentially collapsing the flexible air tube diametrically over each of the check valves into the non-enlarged diameter after the check valve is placed in its respective preferred position. The positioning of the check valves into their respective positions may be achieved, in a further aspect of the invention, by clamping the air tube into a non-enlarged diameter sequentially at the respective preferred locations of the check valves prior to insertion of each of the plurality of check valves into the air passageway from the one air tube end.

According to another preferred aspect of the invention, the method may include deploying the elongate flexible air tube containing the array of check valves into a flexing region of a tire wall, the air passageway operably closing segment by segment between adjacent check valves in reaction to induced forces from the tire flexing region as the flexing region of the tire wall as the flexing region rotates opposite to a rolling tire footprint. Air is thereby forced directionally through the series of one-way check valves from an inlet portal into the air passageway to an outlet portal.

In a preferred aspect of the invention, the plurality of air passageway segments totals at least three, four or five.

In a preferred aspect of the invention, the method may further comprise segmenting the air tube by the plurality of check valves into air tube segments, and positioning each check valve between an upstream air tube segment and a downstream air tube segment.

In a preferred aspect of the invention, the method may further comprise extending the air tube along a channel formed within a tire sidewall.

In a preferred aspect of the invention, the method may further comprise extending the channel and the air tube within the tire sidewall along a substantially 180 degree semi-circular path or extending the channel and the air tube within the tire sidewall along a 360 degree circular path within the tire sidewall.

In a preferred aspect of the invention, the method may further comprise engaging barb projections from each of the check valves into the air tube internal sidewalls to assist in retention of the check valves in their respective positions.

In a preferred aspect of the invention, the method further comprises affixing a clamping collar over the air tube at each position of the check valves within the air passageway.

### Definitions

"Aspect ratio" of the tire means the ratio of its section height (SH) to its section width (SW) multiplied by 100 percent for expression as a percentage.

"Axial" and "axially" means lines or directions that are parallel to the axis of rotation of the tire.

"Circumferential" means lines or directions extending along the perimeter of the surface of the annular tread perpendicular to the axial direction.

"Equatorial Centerplane (CP)" means the plane perpendicular to the tire's axis of rotation and passing through the center of the tread.

"Footprint" means the contact patch or area of contact of the tire tread with a flat surface at zero speed and under normal load and pressure.

"Lateral" means an axial direction.

"Net contact area" means the total area of ground contacting tread elements between the lateral edges around the entire circumference of the tread divided by the gross area of the entire tread between the lateral edges.

"Peristaltic" means operating by means of wave-like contractions that propel contained matter, such as air, along tubular pathways.

"Radial" and "radially" means directions radially toward or away from the axis of rotation of the tire.

### Brief Description of the Drawings

The invention will be described by way of example and with reference to the accompanying drawings in which:
FIG.1 is a perspective view of a tire and air pumping system assembly.
FIG. 2 is a side view of the tire with a 180 degree peristaltic tube and multiple check valves in place.
FIG.3 is a side view of the tire with a 360 degree peristaltic tube alternative embodiment.
FIG. 4 is a side view of the tire with two 180 degree peristaltic tubes in an alternative embodiment.
FIG. 5 is a perspective view of a check valve prior to insertion into a peristaltic tube.
FIG. 6 is a section view of the check valve in the "open" flow position.
FIG. 7 is a section view of the check valve in the "closed" flow position.
FIG. 8 is a partial section view showing a check valve being introduced into an inflated tube by a rod.
FIG. 9 is a partial section view showing the check valve being seated in place in an inflated tube by the rod.
FIG. 10 is a partial section view showing a second check valve being introduced into the inflated tube by a rod.
FIG. 11A is a perspective view of a clamp in the "open" position prior to placement over the valve and the tube.
FIG. 11B is a perspective view of a clamp in the "closed" position.
FIG. 12; Perspective view of a tube with 3 valves in place. The right valve is retained in its intended location by a clamp.

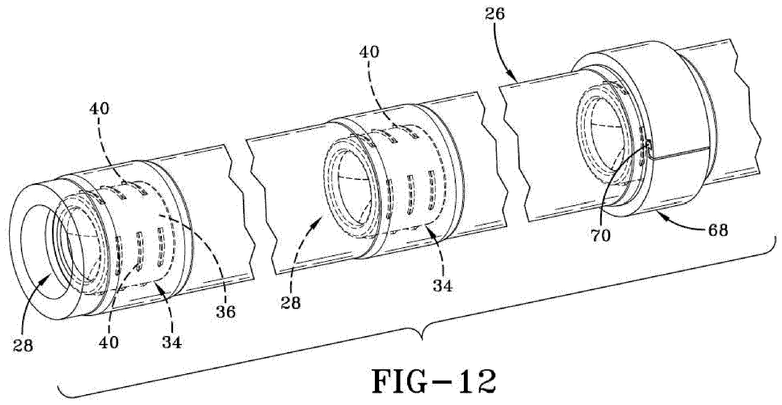

FIG. 12 is a Perspective view of a tube with 3 valves in place. The right valve is retained in its intended location by a clamp.

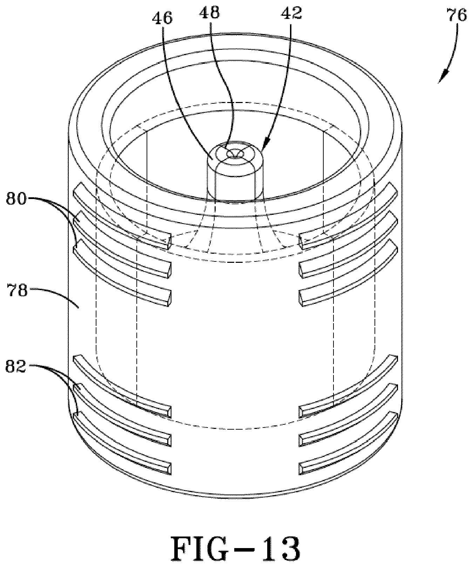

FIG. 13 is a perspective view of an alternative splice-configured check valve.

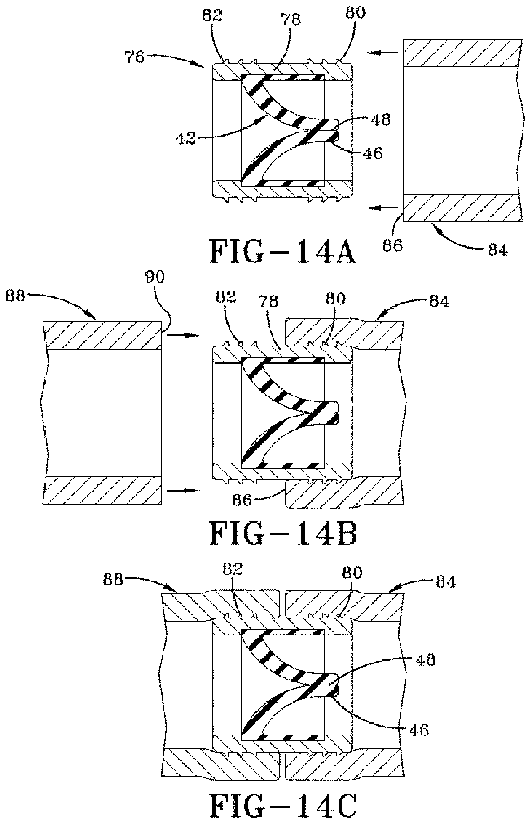

FIG 14A is a section view showing a tube end going into position over one end of the splice-configure check valve.
FIG. 14B is a section view showing a second tube end going into position over the other end of the check valve.
FIG. 14C is a section view showing the check valve with two tubes attached.

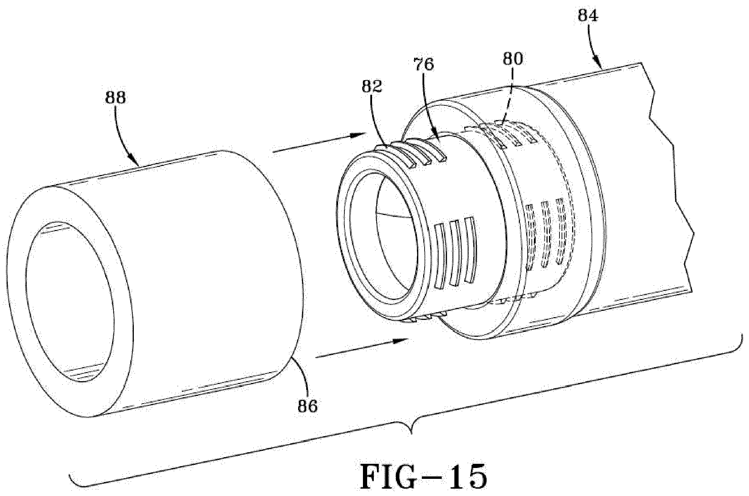

FIG. 15 is a perspective view of the step shown in FIG. 14B.

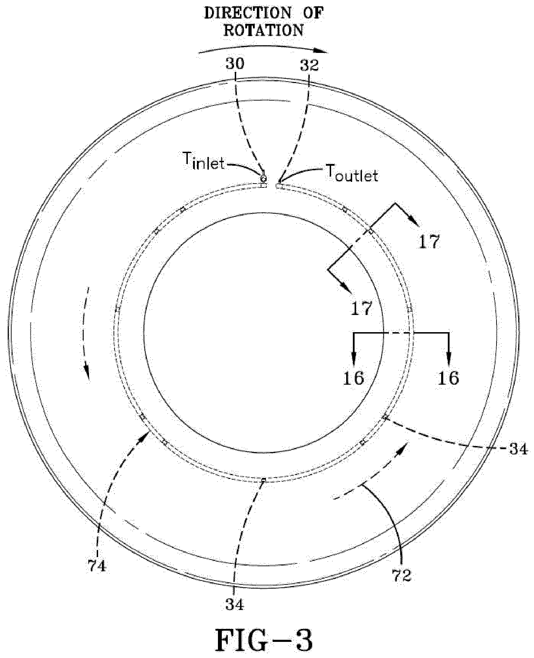

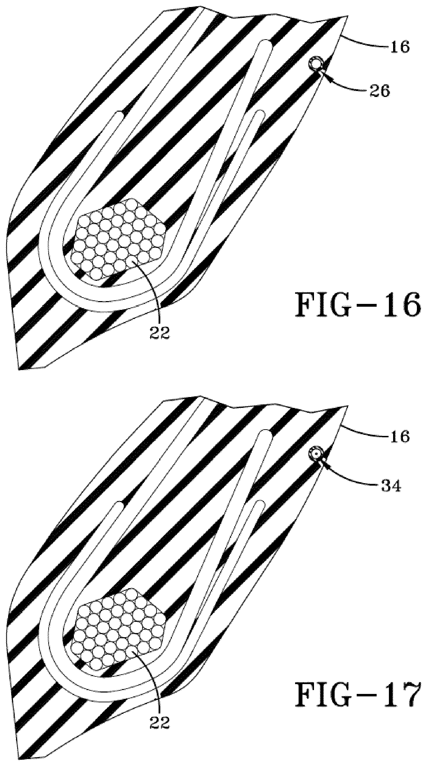

FIG. 16 is a section view taken from FIG.3 showing the tube.
FIG. 17 is a section view taken from FIG.3 showing the check valve in the tube.

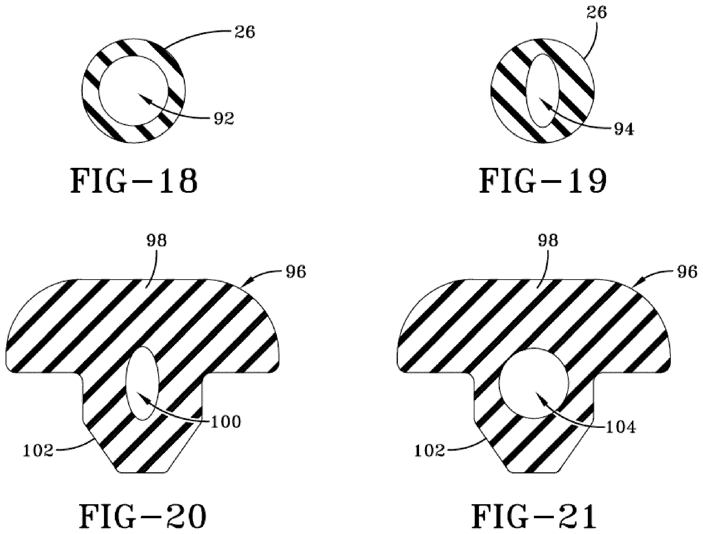

FIGS. 18, 19, 20 and 21 show alternative embodiments of peristaltic tube configurations suitable for use with the check valves.

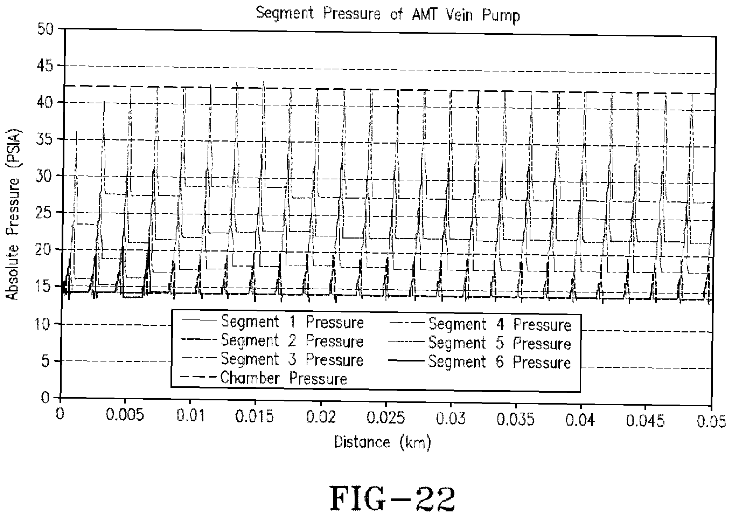

FIG.22 is a graph showing segment pressure of an AMT Vein pump showing pressure vs. distance (km).

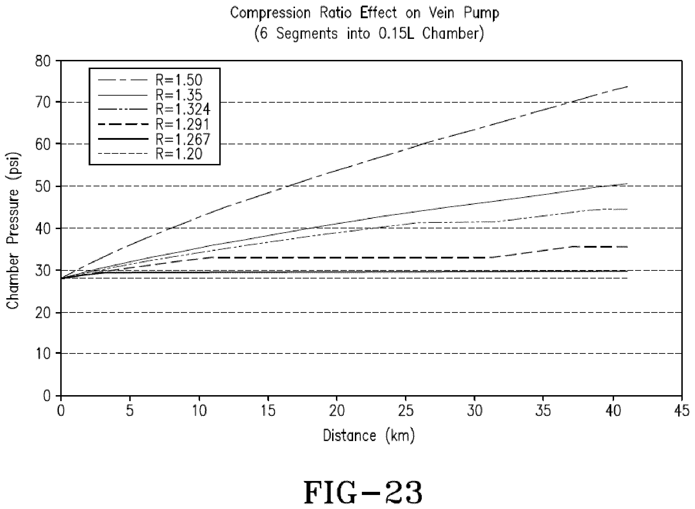

FIG. 23 is a graph of compression ratio effect on a vein pump showing chamber pressure vs. distance.

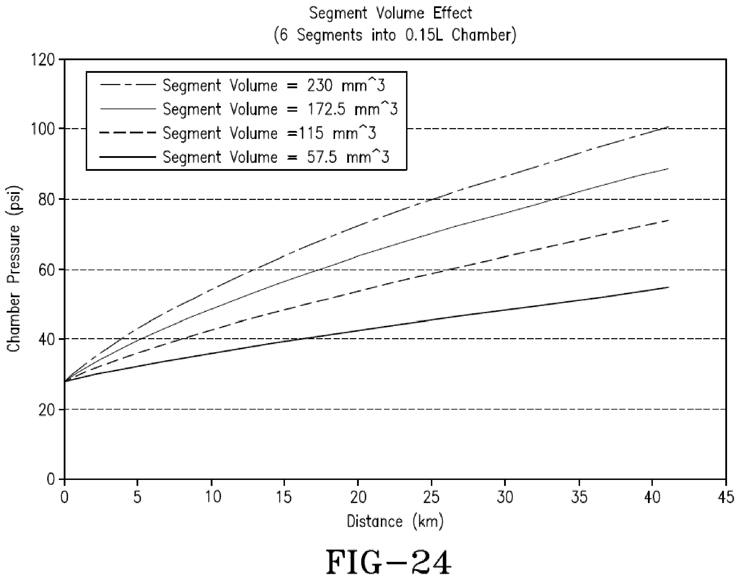

FIG. 24 is a graph of segment volume effect in a six segment tube having a .15L Chamber.

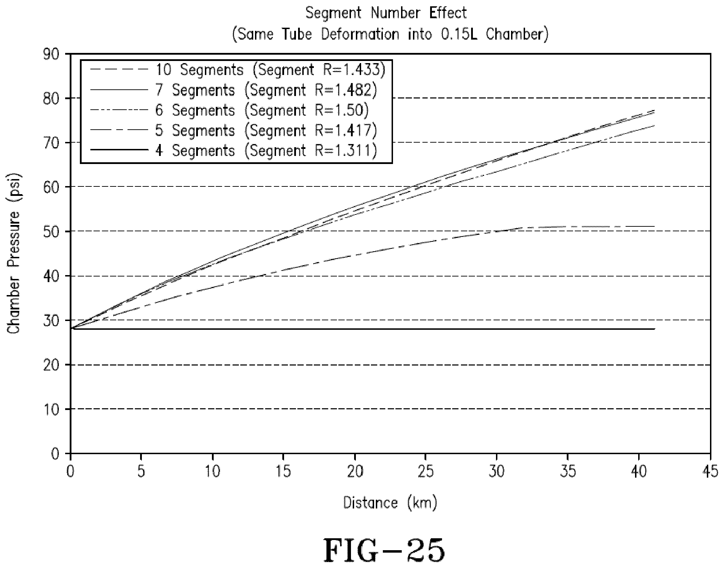

FIG. 25 is a graph showing the effect of segment number on chamber pressure.

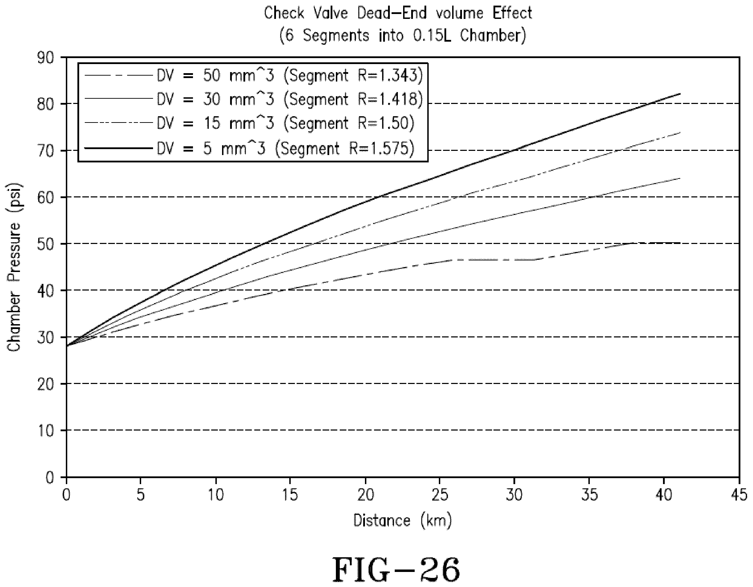

FIG. 26 is a graph showing check valve dead-end volume effect in a six segment tube configuration.

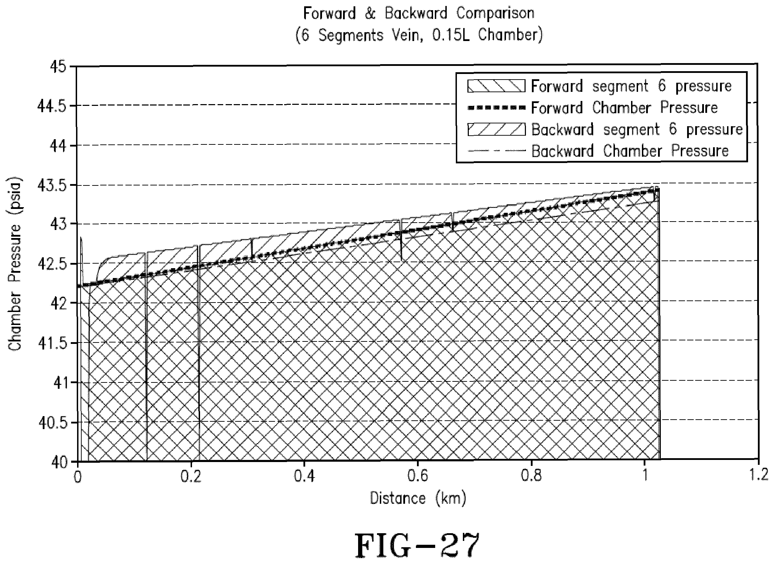

FIG. 27 is a graph comparing forward and backward tube performance.

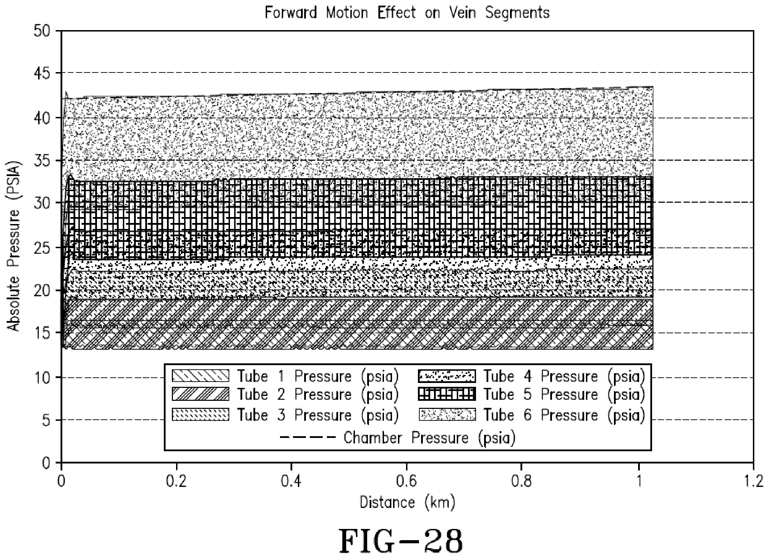

FIG. 28 is a graph showing the effect of forward motion on the vein segments.

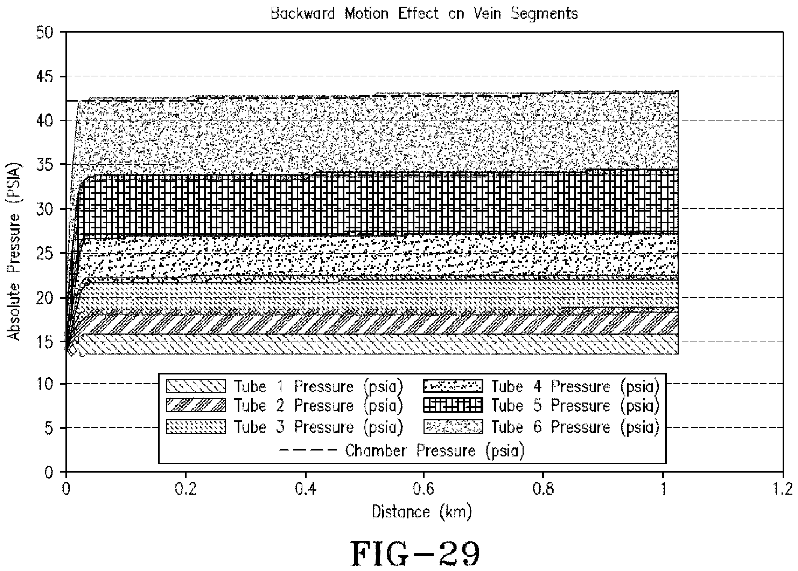

FIG. 29 is a graph showing the effect of backward motion on the vein pressure.

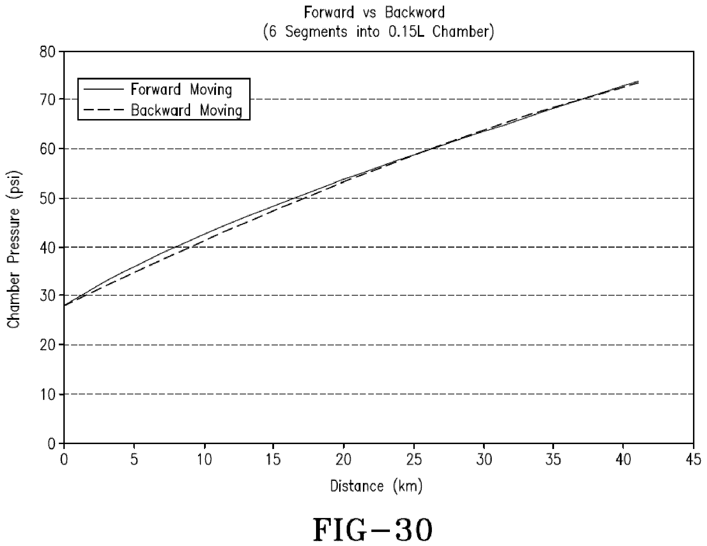

FIG. 30 is a graph comparing forward vs. backward chamber pressure.

### Detailed Description of the Invention

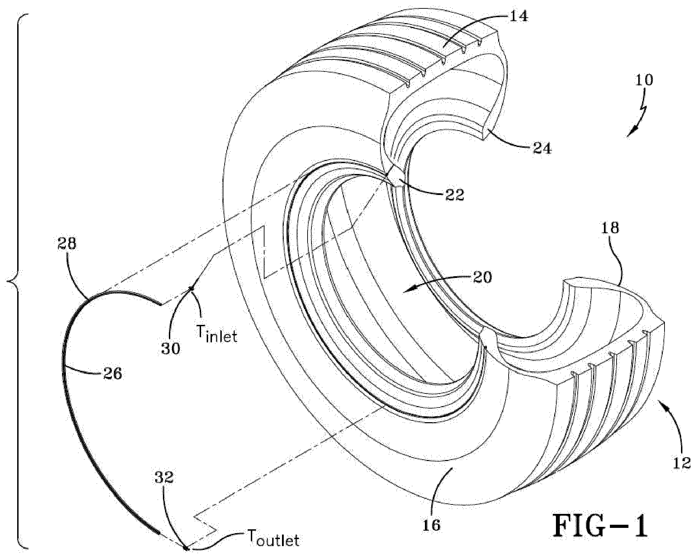

Referring to FIGS. 1, a tire and air maintenance pump assembly 10 (forming an air maintenance tire or "AMT") includes a tire and a vein pump assembly 28. The general operation of a peristaltic pump for use in a tire is described in US-B-8,113,254 and US-B-8,042,586. The tire is constructed to provide a tread region 14, a pair of sidewalls 16, 18 extending from opposite bead areas 22, 24 to the tire read region 14. The tire encloses a tire cavity 20. The air maintenance assembly includes an elongate air tube 26 that encloses an annular passageway 28. The tube 42 is formed of a resilient, elastomeric flexible material such as plastic or rubber compounds and composites that are capable of withstanding repeated deformation cycles wherein the tube is deformed into a flattened condition subject to external force and, upon removal of such force, returns to an original condition generally circular in cross-section. The tube is of a diameter sufficient to operatively pass a volume of air sufficient for the purpose of maintaining air pressure within the cavity 20. The tube 26 is shown to follow a 180 degree semi-circular path in the configuration of FIG. 1. However, other configurations may be employed as will be described without departing from the invention.

The air maintenance vein pump assembly further includes an inlet device 30 and an outlet device 32 spaced apart approximately 180 degrees at respective opposite end locations of the air tube 26. The outlet device 32 has a T-shaped configuration in which T-forming sleeves connect to an end of the tube 26 and an outlet conduit conducts air from the tube to the tire cavity 20. The inlet device 30 likewise is of a T-shaped configuration, connecting to an opposite end of the tube 28 and having an inlet conduit which intakes outside air into the tube passageway 28. The applications previously identified provide the details of the outlet and inlet devices. Situated within the inlet and outlet devices are appropriate, commercially available valve mechanisms for controlling air intake into the tube 26 and outlet from the tube into the cavity 20.

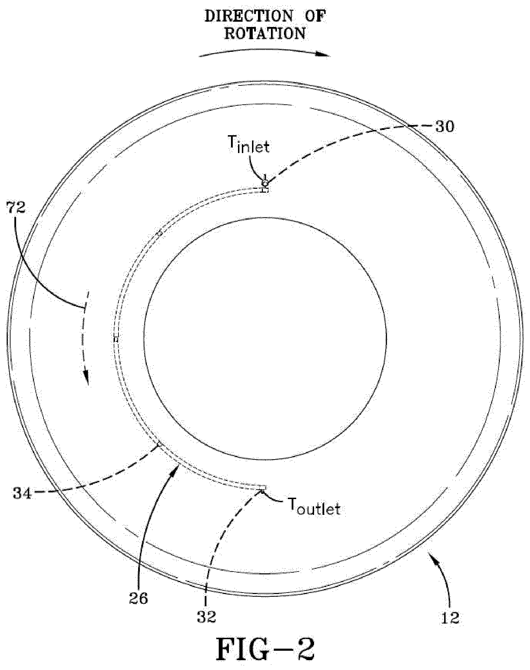

As will be appreciated from FIG. 2, the air tube 26, inlet device 30, and the outlet device 32 are positioned within an appropriately complementarily configured channel within one of the tire sidewalls. As the tire rotates in the direction of rotation indicated, a footprint is formed against a ground surface (not shown). A compressive force is thus directed into the tire from the footprint and acts to flatten a segment of the air tube 26 and passageway 28. As the tire rotates further, the air tube and passageway are sequentially flattened and pump air in the direction 72 shown. Flattening of the tube segment by segment thereby forces air from the inlet along tube passageway 28, until the pressurized air is directed from the outlet and into the tire cavity. Appropriate valve mechanism at the outlet will vent the air in the event that the tire cavity pressure is at or above the recommended tire pressure. Pumping of air occurs for one-half the revolution of the tire with the 180 degree air tube configuration shown.

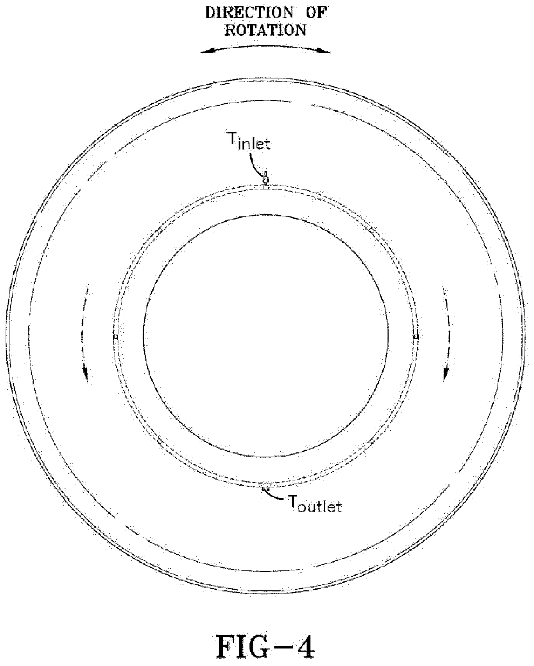

FIG. 3 shows an alternative 360 degree air tube which functions as described above, with the exception that air is pumped along the air tube in direction 72 for the entire 360 degree revolution of the tire. FIG. 4 shows a tire with two 180 degree peristaltic tubes as an alternative embodiment. In the FIG. 4 embodiment, the pump will function in either direction of tire rotation shown by the directional arrows. The two air tubes are each operational in a respective direction of rotation to pump air into the tire cavity.

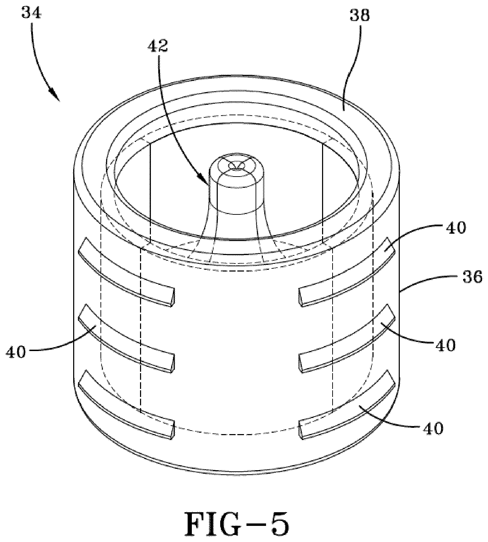

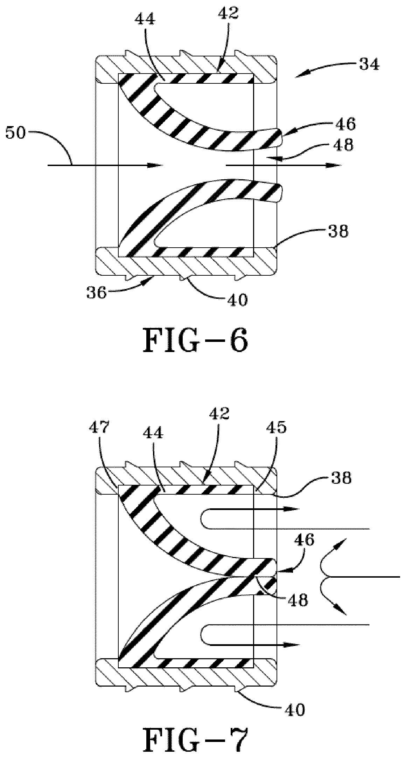

With reference to FIGS. 5, 6 and 7, pursuant to the invention a plurality of check valves 34 are provided for assembly into the passageway 28 of the vein tube 26. The check valve 34 includes a cylindrical valve body 36, composed of any suitable rigid or semi-rigid material. The body 36 has a rounded forward end rim 38. An array of outwardly directed retention ribs or flanges 40 are spaced apart along the surface of the valve body 36, each retention rib angling to the rear of the body. A flexible membrane member 42, of suitable elastomeric composition, is assembled into a central through passage of the cylindrical valve body 36. The membrane member 42 includes a cylindrical membrane body captured within the valve body 36 by in turned end flanges 45, 47 of the valve body 36. The membrane insert 42 further includes a central projecting nose 46 having a slit 48 therethrough. The nose 46 forms a gate through which pressurized air can flow in a forward direction 50 (FIG. 6) but which prevents a back flow of air through the check valve in a rearward direction (FIG. 7).

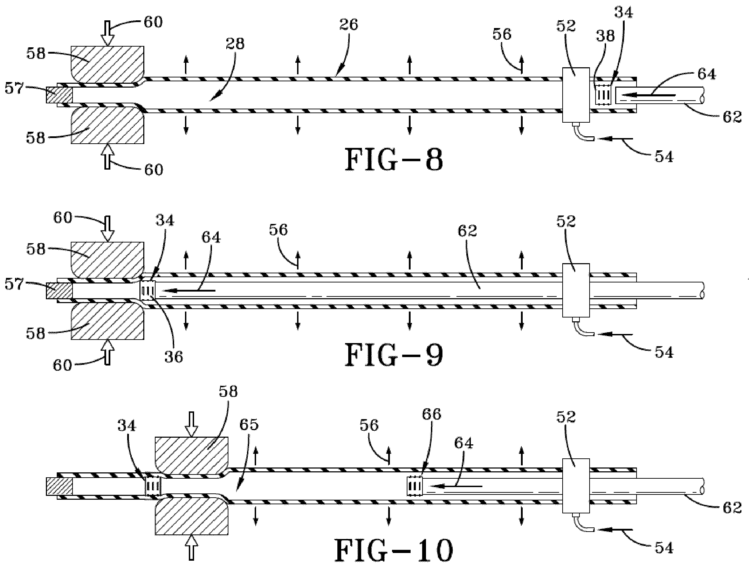

FIGS. 8, 9 and 10 show an assembly sequence whereby multiple check valves 34 may be inserted into the axial passageway 28 of the elastomeric flexible tube 26. The multiple check valves 34 are designed to occupy spaced apart respective locations within the tube 26 in an orientation which facilitates a flow of pressurized air in a forward direction from the inlet 30 to the outlet 32 but which prevents a back flow of pressurized air in the reverse direction. As seen in FIG. 8, a pressurized air source 52 is positioned to inject pressurized air 54 into the tube passageway 28, whereby radially expanding the tube in the direction 56 so that the passageway 28 assumes a temporary, oversized diameter. A stopper 57 is inserted into a forward end of the tube to prevent the flow 54 from escaping. At the location within the passageway 28 that a check valve 34 is to be located, a clamping collar 58 is affixed over the tube 26 and exerts a radial force 60 on the tube, thereby preventing the tube from expanding at that location. Thereafter, a check valve 34 is inserted into an open end of the tube with the membrane gate opening toward the outlet end of the tube. A rod 62 pushes the check valve 34 through the expanded tube 26 until it reaches its intended location within passageway 28, as shown in FIG. 9.

The clamping collar 58 may then be removed and relocated down the axial length of the tube 26 to a location where a second check valve 66 is to be located. The second check valve 66 is positioned at the open end of the tube and pushed by rod 62 through the diametrically expanded tube into the intended second check valve location 65 within the tube passageway 28. FIG. 10 illustrates insertion of the second check valve 66 by the rod 62. The above procedure is repeated until all of the check valves 34 are in place within the tube 28. Once the pressurized air flow 54 is withdrawn from the tube passageway, the tube 26 elastically radially contracts into its original unexpanded condition. The tube 26 in its resilient radial contraction, thus captures each placed check valve 34 and exerts a radial compression force on the check valve bodies 36 to hold the check valves in their intended locations within the passageway 28. With the radial contraction of the tube, the retention flanges or barbs 40 on the sides of the cylindrical valve body of each check valve 34 engage into the sidewalls of the tube defining the passageway 28, and thus function, in conjunction with the tube radial clamping force on the check valves, to retain the check valves 34 in their intended placement locations. FIG. 12 show the check valves 34 assembled into the tube passageway with the tube in its original, unexpanded diameter and the retention flanges 40 of each valve body 36 engaging into the sidewalls of the tube forming the passageway 28.

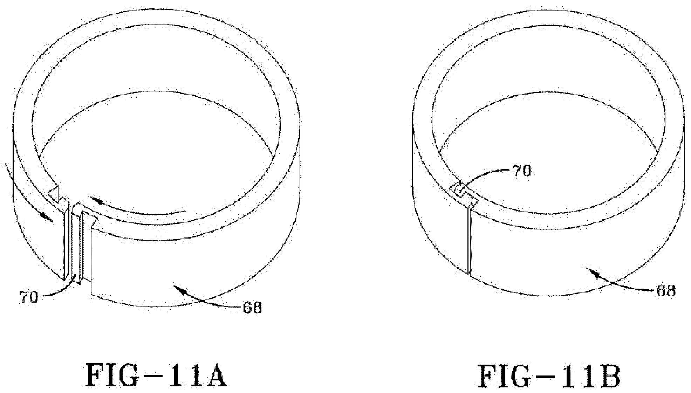

With reference to FIGS. 11A and 11B, multiple secondary retention clamps 68, each in the form of a cylindrical collar, may be deployed over respective locations along the tube 26 where the check valves 34 have been positioned. The clamps 68 are formed of flexible material such as plastic or metal. The clamps 68 open to facilitate receipt of the tube 26 through each clamp. Subsequently, the clamps 68 are closed into a circular configuration and overlapping locking flanges 70 engage to hold each clamp 68 in a closed circular configuration over the tube 26. The opening through the clamps 68 is sized nominally smaller than the tube diametric dimension, so that the clamps 68 in a closed position press the tube radially inward over the check valves.

FIG. 12 shows the placement of the claims 68 along the tube 26 over respective check valve locations. The resilient radially directed force of the tube 26 combined with engagement of each check valve's retention flanges 40 with internal tube sides and the clamps 68 provide redundant means for retaining each check valve in its intended location within the tube passageway 28. Opening and closing of the check valves 34 during operation of the pump assembly will accordingly not act to dislocate any of the check valves from their positions within the tube passageway.

Referring to FIG. 13, an alternatively configured check valve 76 is shown in a splice configuration. The check valve 76 has a relatively more elongate cylindrical valve body 78. First and second arrays of retention flanges or barbs are provided, the first array 80 at a forward location along the body 78 and the second array 82 at a rearward location. The body 78, as will be seen in FIGS. 14A, 14B and 14C, has a centered membrane insert configured to operate in the manner previously explained. The elongate body 78 is used for the purpose of splicing two segments of tube 84, 88 together. An end 86 of each of the tubes 84, 88 attaches over a respective end of the body 78 (FIGS. 14A, 14B, 15), whereupon the barb arrays 80, 82 engage internal sidewalls of the tube ends 86 as shown in FIG. 14C and 15.

With reference to FIGS. 1, 3, 16 and 17, upon completed assembly of the check valves 34 into the tube passageway 28, the tube 26 is inserted into a complementarily configured channel formed within a tire sidewall 16. The lower sidewall region shown in FIGS. 16 and 17 above the bead region 22 flexes sufficiently to allow for the segment by segment air pumping action by the tube described previously. If desired, higher locations on the tire sidewall may be used as the location for the vein pump tube 26 without departing from the invention. One or both of the tire sidewalls may contain an air pumping tube if desired, and the system may be configured in a 180 degree, 360 degree, or dual 180 degree tube configuration.

While the tube shown in FIG. 1 is generally of circular cross-section, alternative tube sectional configurations may be used. FIG. 18 shows in cross-section circular tube 26 having a circular through passageway 92. FIG. 19 shows a circular tube 26 modified to have an elliptical air passageway 94. FIG. 20 shows a mushroom shaped tube 96 having adjoining cap 98 and plug 102 tube components. The tube fits into a sidewall groove with the cap abutting an outer sidewall surface. An elliptical air passageway 100 extends through the tube. FIG. 21 shows a mushroom shaped tube with a circular air passageway. It will be understood that the check valves (such as 34) will have a complementary external shape and configuration to the shape of the air passageway into which the check valves are positioned. Likewise, the clamping mechanisms (such as 68) will be configured to fit over the tube configuration in order to impose a radial clamping force on a check valve.

FIG. 22 shows a chart for a multi-segment AMT Vein Pump and graphs absolute pressure (PSA) vs. distance travelled by the tire (km). FIG. 22 illustrates the amplification of segment pressure as the tube forces air through the series of tube segments, adjacent segments being separated by a check valve. The check valves between the tube segments open only in a forward direction between air inlet and air outlet and do not allow any back flow of air within the tube in a reverse direction. In stringing a series of segments together, adjacent segments separated by a check valve, a vein-type system is constructed. The adjoining segments sequentially pump air segment to segment as the tire-mounted tube moves through a rolling tire footprint. The check valves prevent a back flow of air and operate to increase the pumping efficiency of the vein/tube system. Consequently, the vein/tube volumetric size may be as small as possible without compromising achievement of the requisite air pumping volume necessary for maintaining the tire at its rated pressure. The check valve and vein segment construction thus serves to improve to the air pressure level at the outlet portal beyond what would be attained from a single segment, non-check valve, tube of equal length.

FIG. 23 represents a case study graph on the compression ratio effect of the vein pump using a six segment assembly into a .15L chamber. The compression ratios R=1.50, 1.35, 1.324, 1.291, 1.267 and 1.20 are graphed. As the distance (km) travelled increases, the chamber pressure increases, with R=1.50 yielding the greatest increase.

FIG. 24 shows a case study graph on the segment volume effect on a vein pump employing a six segment assembly delivering pressurized air to a .15L chamber. The segment volumes graphed are 57.5, 114, 172.5 and 230 cubic mm. The chamber pressure vs. distance (km) travelled show the chamber pressure increasing with distance, with the larger segment volume attaining a higher pressure level.

FIG. 25 show a case study graph on the effect of segment number. The number of segments examined are vein pumps having 10, 7, 6, 5, 4 segments, each segment having a radius shown in FIG. 25. The chamber pressure is graphed against distance travelled. The graph indicates that the greater the number of segments utilized in the vein pump, the higher chamber pressure attained. The graphs for 10, 7 and 6 segments, however, are relatively coincidental, implying that increasing the number of segments beyond a certain point results does not provide significant benefit.

FIG. 26 graphs in the case study (six segments, .15L chamber) the check valve dead-end volume effect resulting from a variance in segment radius. The chamber pressure vs. distance travelled lines show that the dead-end volume of 5 cubic mm results in a highest chamber pressure at a segment radius R-1.575.

FIG. 27 graphs a comparison between forward and rearward tire rotational direction under the controlled case study parameters. The chamber pressure vs. distance travelled is graphed for forward segment-6 pressure; forward chamber pressure; backward segment 6 pressure; and backward chamber pressure. The graph indicates a consistent performance of the vein pump in both forward and rearward directions.

FIG. 28 shows forward motion effect on the vein segments, graphing absolute pressure of each of the six segments vs. distance travelled. As shown thereby, the pressure increases from segment to segment, 1-6, with the greatest absolute pressure present in segment six.

From the foregoing empirical verification, it will be understood that the subject vein pump assembly in a tire achieves significant advantage over a single, non-segmented peristaltic tube system. The vein concept utilizes one tube and multiple check valves inside a tubing, which is divided by the check valves into a series of tube segments. The check valves provide one-way air flow through the one-way check valves, each aligned to open toward an outlet port of the vein pump. Standard flexible tuber is used. The method of check valve placement contemplates:
(A) one end of the tubing is opened;
(B) a clamping fixture may be placed around the tube where a check valve is to be located;
(C) a check valve is dropped or forced into the tubing until positioned by the clamping fixture;
(D) the clamping fixture is moved to a second location along the tube where a second check valve is to be placed;
(E) a second check valve is dropped or forced into the tubing to its intended position within the tube passageway;
(F) steps b-e are repeated until all of the check valves are in place;
(G) clamping collar may be affixed around the tube at each check valve location to hold the check valve in place. The check valve may further be oversized with respect to the tube passageway and include one or more retention flanges which engage sidewalls defining the tube passageway.

The above method may further be modified to include radial expansion of the air passageway by forced air injection so as to enlarge the passageway for receipt of the check valves therein.

The subject vein system may utilize a single, unitary tube length separated into segments by the inserted check valves, or multiple discrete tube segments joined together by the check valve bodies. As a result, the subject system controls the direction of air flow and eliminates loss of air from back flow. The vein pump requires a relatively low tire sidewall deformation to achieve a requisite pressure build. Consequently, the vein system is relatively forgiving and can accept tire or vein tube groove variation or non-uniformity. The vein system further is tolerant of rim variation. A higher efficiency is thus achieved by using a multi-segmented tube system resulting in a higher compression ratio at the final segment due to the amplification effect. Any issue with dead-end volume is also eliminated.

## Claims

1. A tire having a tread region and first and second sidewalls (16, 18) extending from the tread region (14), an elongate tubular air passageway (28) enclosed within a flexing region of a tire wall, wherein the air passageway (28) comprises an air inlet portal (30) operable to admit air into the air passageway and an outlet portal (32) spaced apart from the inlet portal operable to withdraw pressurized air from the air passageway (28), wherein the air passageway (28) is configured to operably close segment by segment in reaction to induced forces from the tire flexing region as the flexing region of the tire wall rotates opposite a rolling tire footprint, wherein the elongate air passageway (28) comprises at least one check valve device (34) seated within the axial air passageway (28), wherein the check valve device (34) divides the elongate air passageway (28) into a plurality of air passageway segments comprising an upstream air passageway segment and a downstream air passageway segment, wherein the check valve device (34) has an external dimension and configuration such that it is operable to substantially occupy the air passageway (28), wherein the check valve device (34) has a valve gate (46) which is operable in an open position to allow pressurized air to directionally pass through the check valve body from the upstream air passageway segment to the downstream air passageway segment and which is operable in a closed position to prohibit air from passing through the check valve body from the downstream air passageway segment to the upstream air passageway segment, and wherein the tire (10) is configured such that a flow of pressurized air through the check valve device (34) extends in one axial direction along the air passageway (28) from an inlet portal (30) of the elongate air passageway (28) toward an outlet portal (32) of the air passageway (28), **characterized in that** each check valve device (34) comprises a tubular body (36) closely received within the air passageway (28) in an interference fit whereby passageway sidewalls defining the air passageway (28) operably engage and exert a radially directed compressive force on the tubular body (36) to hold the tubular body (36) at a location within the air passageway (28).

2. The tire of claim 1 comprising a plurality of the check valve devices (34) spaced apart along the air passageway (28) and dividing the air passageway into a plurality of air passageway segments, wherein each check valve device (34) is configured to operably open toward the outlet portal from within the air passageway (28) to allow pressurized air to flow directionally from the inlet portal (30) to the outlet portal (32).

3. The tire of claim 1 or 2, wherein the air passageway comprises an internal axial passageway of an elongate flexible air tube (26) affixed into a groove within the tire one sidewall (16, 18).

4. The tire of claim 1 wherein the tubular body (36) comprises at least one outwardly directed retention barb (40) engaging into an air passageway sidewall to hold the tubular body (36) at the location within the air passageway (28).

5. The tire of claim 1 wherein the tubular body (36) houses a flexible membrane member (42) operably opening along a slit (48) to admit pressurized air from one side of the membrane member (42) through the membrane member (42).

6. The tire of at least one of the previous claims wherein the air passageway (28) comprises an axial passageway through an air tube (26) composed of flexible material, the air tube (26) extending continuously between the inlet and the outlet portals (30, 32); and/or wherein the air passageway comprises an elongate multi-segmented flexible air tube formed from a plurality of air tube segments and wherein at least one check valve device (34) is positioned between and connects at opposite ends from within the air passageway (28) an adjoining pair of the air tube segments.

7. The tire of at least one of the previous claims wherein the air passageway (28) comprises an axial passageway through an elongate air tube (26) composed of flexible material, the air tube extending continuously between the inlet and the outlet portals (30, 32), and wherein the tire (10) further comprises a clamping collar (58) affixed externally to the air tube (26) over the location of the one check valve device (34) within the elongate tube air passageway (28).

8. The tire of at least one of the previous claims wherein the check valve devices (34) are spaced at substantially equidistant intervals along the air passageway (28); and/or wherein the air passageway (28) substantially extends in a 180 degree arcuate path along the one tire sidewall (16, 18) or in a 360 degree circular path that circumscribes the one tire sidewall (16, 18).

9. A method of assembling an air pump for a tire (10), the method comprising:
(A) opening an axial air passageway (28) of an elongate flexible air tube (26) at one end;
(B) inserting at least one one-way check valve (34) into the air passageway (28) from the one end, the one check valve (34) having an external nominal width greater than an internal nominal width of the air tube passageway (28);
(C) establishing a press fit engagement between the at least one check valve device (34) and air tube internal sidewalls defining the air passageway (28) to place the check valve (34) at a position within the air passageway;
(D) retaining the one check valve (34) in the position within the air passageway (28) by radial pressure from the air tube internal sidewalls and
(E) closing the one end of the flexible air tube (26).

10. The method of claim 9 wherein
step (B) comprises inserting one by one a plurality of one-way check valves (34) into the air passageway (28) from the one end to form an axial array of spaced apart check valves along the air passageway, each check valve (34) having an external nominal width greater than a nominal width of the air tube passageway;
step (C) comprises establishing a press fit engagement between each check valve (34) and air tube internal sidewalls defining the air passageway (28) to place each check valve (34) at a respective position within the air passageway (28); and
step (D) comprises retaining the check valves (34) in the respective positions within the air passageway by radial pressure from the air tube internal sidewalls.

11. The method of claim 9 or 10 further comprising repeating steps (B) (C) and (D) for each of a plurality of one-way check valves (34) prior to closing the one end, the plurality of check valves (34) being inserted sequentially to form a spaced apart array of check valves axially spaced apart along the air passageway (28), with each of the check valves (34) residing at a respective position within the air passageway (28).

12. The method of claim 9, 10 or 11 further comprising enlarging the flexible air tube (26) diametrically from a non-enlarged diameter to an enlarged diameter prior to insertion of each of the plurality of check valves (34) into the air passageway (28) from the one air tube end, and collapsing the flexible air tube (26) diametrically over each of the check valves (34) into the non-enlarged diameter after the check valve is placed in its respective position.

13. The method of at least one of the claims 9 to 12 further comprising clamping the air tube (26) into a non-enlarged diameter sequentially at the respective locations of the check valves (34) prior to insertion of each of the plurality of check valves (34) into the air passageway (28) from the one air tube end; and/or further comprising deploying the elongate flexible air tube (26) containing the array of check valves into a flexing region of a tire wall, the air passageway (28) operably closing segment by segment in reaction to induced forces from the tire flexing region as the flexing region of the tire wall as the flexing region rotates opposite to a rolling tire footprint.

14. The method of at least one of the claims 9 to 13 further comprising:
deploying an air inlet portal (30) communicating with the air passageway (28) operable to admit air into the air passageway; and
deploying an outlet portal (32) communicating with the air passageway (28) spaced apart from the inlet portal operable and operable to withdraw pressurized air from the air passageway.

## Patentansprüche

1. Reifen, umfassend einen Laufflächenbereich und eine erste und eine zweite Seitenwand (16, 18), die sich von dem Laufflächenbereich (14) erstrecken, einen langgestreckten röhrenförmigen Luftdurchgang (28), der in einem Walkbereich einer Reifenwand eingeschlossen ist, wobei der Luftdurchgang (28) ein Lufteinlassportal (30), das betreibbar ist, um Luft in den Luftdurchgang einströmen zu lassen, und ein von dem Einlassportal beabstandetes Auslassportal (32), das betreibbar ist, um unter Druck gesetzte Luft aus dem Luftdurchgang (28) abzuziehen, umfasst, wobei der Luftdurchgang (28) dafür ausgelegt ist, sich, in Reaktion auf induzierte Kräfte von dem Reifenwalkbereich, wenn der Walkbereich der Reifenwand gegenüber einer Aufstandsfläche des rollenden Reifens rotiert, Segment für Segment wirksam zu schließen, wobei der langgestreckte Luftdurchgang (28) mindestens eine Rückschlagventilvorrichtung (34) umfasst, die in dem axialen Luftdurchgang (28) sitzt, wobei die Rückschlagventilvorrichtung (34) den langgestreckten Luftdurchgang (28) in eine Vielzahl von Luftdurchgangssegmenten unterteilt, umfassend ein stromaufwärtiges Luftdurchgangssegment und ein stromabwärtiges Luftdurchgangssegment, wobei die Rückschlagventilvorrichtung (34) eine solche Außenabmessung und Konfiguration aufweist, dass sie betreibbar ist, um den Luftdurchgang (28) im Wesentlichen einzunehmen, wobei die Rückschlagventilvorrichtung (34) eine Ventilöffnung (46) aufweist, die in einer offenen Position betreibbar ist, um zuzulassen, dass unter Druck gesetzte Luft von dem stromaufwärtigen Luftdurchgangssegment zu dem stromabwärtigen Luftdurchgangssegment direktional durch den Rückschlagventilkörper strömt, und die in einer geschlossenen Position betreibbar ist, um zu verhindern, dass Luft von dem stromabwärtigen Luftdurchgangssegment zu dem stromaufwärtigen Luftdurchgangssegment durch den Rückschlagventilkörper strömt, und wobei der Reifen (10) so ausgebildet ist, dass ein Strom von unter Druck gesetzter Luft durch die Rückschlagventilvorrichtung (34) sich in einer axialen Richtung entlang dem Luftdurchgang (28) von einem Einlassportal (30) des langgestreckten Luftdurchgangs (28) zu einem Auslassportal (32) des Luftdurchgangs (28) erstreckt, **dadurch gekennzeichnet, dass** jede Rückschlagventilvorrichtung (34) einen röhrenförmigen Körper (36) umfasst, der in einer Presspassung genau passend in dem Luftdurchgang (28) aufgenommen ist, wobei den Luftdurchgang (28) definierende Durchgangsseitenwände wirksam an dem röhrenförmigen Körper (36) angreifen und eine radial gerichtete Kompressionskraft auf diesen ausüben, um den röhrenförmigen Körper (36) an einer Stelle in dem Luftdurchgang (28) festzuhalten.

2. Reifen nach Anspruch 1, umfassend eine Vielzahl der Rückschlagventilvorrichtungen (34), die entlang dem Luftdurchgang (28) voneinander beabstandet sind und den Luftdurchgang in eine Vielzahl von Luftdurchgangssegmenten unterteilen, wobei jede Rückschlagventilvorrichtung (34) dazu eingerichtet ist, sich von in dem Luftdurchgang (28) wirksam zu dem Auslassportal hin zu öffnen, um zuzulassen, dass unter Druck gesetzte Luft direktional von dem Einlassportal (30) zu dem Auslassportal (32) strömt.

3. Reifen nach Anspruch 1 oder 2, wobei der Luftdurchgang einen inneren axialen Luftdurchgang aus einem langgestreckten flexiblen Luftschlauch (26), der in einer Nut in der einen Reifenseitenwand (16, 18) angebracht ist, umfasst.

4. Reifen nach Anspruch 1, wobei der röhrenförmige Körper (36) mindestens einen auswärts gerichteten Rückhaltewiderhaken (40) umfasst, der in einer Luftdurchgangsseitenwand angreift, um den röhrenförmigen Körper (36) an der Stelle in dem Luftdurchgang (28) festzuhalten.

5. Reifen nach Anspruch 1, wobei der röhrenförmige Körper (36) ein flexibles Membranelement (42) beherbergt, das sich wirksam entlang einem Schlitz (48) öffnet, um unter Druck gesetzte Luft von einer Seite des Membranelements (42) durch das Membranelement (42) einströmen zu lassen.

6. Reifen nach mindestens einem der vorhergehenden Ansprüche, wobei der Luftdurchgang (28) einen axialen Durchgang durch einen aus flexiblem Material zusammengesetzten Luftschlauch (26) umfasst, wobei der Luftschlauch (26) sich durchlaufend zwischen dem Einlass- und dem Auslassportal (30, 32) erstreckt; und/oder wobei der Luftdurchgang einen langgestreckten, aus mehreren Segmenten bestehenden flexiblen Luftschlauch umfasst, der aus einer Vielzahl von Luftschlauchsegmenten gebildet ist, und wobei mindestens eine Rückschlagventilvorrichtung (34) zwischen einem benachbarten Paar der Luftschlauchsegmente angeordnet ist und an entgegengesetzten Enden von innerhalb des Luftdurchgangs (28) daran anschließt.

7. Reifen nach mindestens einem der vorhergehenden Ansprüche, wobei der Luftdurchgang (28) einen axialen Durchgang durch einen aus flexiblem Material zusammengesetzten langgestreckten Luftschlauch (26) umfasst, wobei der Luftschlauch sich durchlaufend zwischen dem Einlass- und dem Auslassportal (30, 32) erstreckt, und wobei der Reifen (10) weiter einen Klemmkragen (58) aufweist, der außerhalb des Luftschlauchs (26) über der Stelle der einen Rückschlagventilvorrichtung (34) in dem langgestreckten Luftschlauchdurchgang (28) angebracht ist.

8. Reifen nach mindestens einem der vorhergehenden Ansprüche, wobei die Rückschlagventilvorrichtungen (34) in im Wesentlichen gleich beabstandeten Intervallen entlang dem Luftdurchgang (28) voneinander beabstandet sind; und/oder wobei der Luftdurchgang (28) sich im Wesentlichen in einer bogenförmigen Bahn von 180 Grad entlang der einen Reifenseitenwand (16, 18) oder in einer kreisförmigen Bahn von 360 Grad, welche die eine Reifenseitenwand (16, 18) umschreibt, erstreckt.

9. Verfahren zum Zusammenbau einer Luftpumpe für einen Reifen (10), wobei das Verfahren umfasst:
(A) Öffnen eines axialen Luftdurchgangs (28) eines langgestreckten flexiblen Luftschlauchs (26) an einem Ende;
(B) Einbringen mindestens eines Einweg-Rückschlagventils (34) in den Luftdurchgang (28) von dem einen Ende her, wobei das eine Rückschlagventil (34) eine äußere Nennbreite aufweist, die größer als eine innere Nennbreite des Luftschlauchdurchgangs (28) ist;
(C) Erstellen einer Presspassungsverbindung zwischen der mindestens einen Rückschlagventilvorrichtung (34) und den Luftdurchgang (28) definierenden Luftschlauch-Innenseitenwänden, um das Rückschlagventil (34) an einer Position in dem Luftdurchgang anzuordnen;
(D) Rückhalten des einen Rückschlagventils (34) in der Position in dem Luftdurchgang (28) durch radialen Druck von den Luftschlauch-Innenseitenwänden, und
(E) Schließen des einen Endes des flexiblen Luftschlauchs (26).

10. Verfahren nach Anspruch 9, wobei
Schritt (B) das eines nach dem anderen Einbringen einer Vielzahl von Rückschlagventilen (34) in den Luftdurchgang (28) von dem einen Ende her, um eine axiale Anordnung voneinander beabstandeter Rückschlagventile entlang dem Luftdurchgang zu bilden, umfasst, wobei jedes Rückschlagventil (34) eine äußere Nennbreite aufweist, die größer als eine Nennbreite des Luftschlauchdurchgangs ist;
Schritt (C) das Erstellen einer Presspassungsverbindung zwischen jedem Rückschlagventil (34) und den Luftdurchgang (28) definierenden Luftschlauch-Innenseitenwänden umfasst, um jedes Rückschlagventil (34) an einer jeweiligen Position in dem Luftdurchgang (28) anzuordnen; und
Schritt (D) das Rückhalten der Rückschlagventile (34) in den jeweiligen Positionen in dem Luftdurchgang durch radialen Druck von den Luftschlauch-Innenseitenwänden umfasst.

11. Verfahren nach Anspruch 9 oder 10, weiter das Wiederholen der Schritte (B), (C) und (D) für jedes einer Vielzahl von Einweg-Rückschlagventilen (34) vor dem Schließen des einen Endes umfassend, wobei die Vielzahl von Rückschlagventilen (34) sequentiell eingebracht wird, um eine voneinander beabstandete Anordnung von Rückschlagventilen, die axial entlang dem Luftdurchgang (28) beabstandet sind, zu bilden, wobei jedes der Rückschlagventile (34) sich an einer jeweiligen Position in dem Luftdurchgang (28) befindet.

12. Verfahren nach Anspruch 9, 10 oder 11, weiter das diametrische Vergrößern des flexiblen Luftschlauchs (26) von einem nicht vergrößerten Durchmesser zu einem vergrößerten Durchmesser vor dem Einsetzen von jedem der Vielzahl von Rückschlagventilen (34) in den Luftdurchgang (28) von dem einen Luftschlauchende her, und das diametrische Zusammenklappen des flexiblen Luftschlauchs (26) über jedes der Rückschlagventile (34) in den nicht vergrößerten Durchmesser, nachdem das Rückschlagventil in seiner jeweiligen Position angeordnet ist, umfassend.

13. Verfahren nach mindestens einem der Ansprüche 9 bis 12, weiter das sequentielle Klemmen des Luftschlauchs (26) in einen nicht vergrößerten Durchmesser an den jeweiligen Stellen der Rückschlagventile (34) vor dem Einbringen von jedem der Vielzahl von Rückschlagventilen (34) in den Luftdurchgang (28) von dem einen Luftschlauchende her umfassend; und/oder weiter das Einsetzen des langgestreckten flexiblen Luftschlauchs (26), der die Anordnung von Rückschlagventilen enthält, in einen Walkbereich einer Reifenwand umfassend, wobei der Luftdurchgang (28) sich, in Reaktion auf induzierte Kräfte von dem Reifenwalkbereich, wenn der Walkbereich der Reifenwand, wenn der Walkbereich gegenüber einer Aufstandsfläche eines rollenden Reifens rotiert, wirksam Segment für Segment schließt.

14. Verfahren nach mindestens einem der Ansprüche 9 bis 13, umfassend:
Einsetzen eines mit dem Luftdurchgang (28) in Verbindung stehenden Lufteinlassportals (30), das betreibbar ist, um Luft in den Luftdurchgang einströmen zu lassen; und
Einsetzen eines mit dem Luftdurchgang (28) in Verbindung stehenden Auslassportals (32), das von dem Einlassportal beabstandet und betreibbar ist, um unter Druck gesetzte Luft aus dem Luftdurchgang abzuziehen.

## Revendications

1. Bandage pneumatique possédant une zone faisant office de bande de roulement ainsi qu'un premier et un second flanc (16, 18) s'étendant à partir de la zone (14) faisant office de bande de roulement, un passage tubulaire allongé pour l'air (28) logé au sein d'une zone de flexion d'une paroi du bandage pneumatique ; dans lequel le passage pour l'air (28) comprend un site d'entrée pour l'air (30) qui peut être activé pour admettre de l'air dans le passage pour l'air et un site de sortie (32) disposé à l'écart du site d'entrée, qui peut être activé pour prélever de l'air mis sous pression à partir du passage pour l'air (28) ; dans lequel le passage pour l'air (28) est configuré pour se fermer de manière fonctionnelle, segment par segment, en réaction à des forces qui s'exercent à partir de la zone de flexion du bandage pneumatique lorsque la zone de flexion de la paroi du bandage pneumatique effectue des rotations à l'opposé d'une empreinte du bandage pneumatique en train de rouler ; dans lequel le passage allongé pour l'air (28) comprend au moins un dispositif (34) faisant office de clapet antiretour logé au sein du passage axial pour l'air (28) ; dans lequel le dispositif (34) faisant office de clapet antiretour divise le passage allongé pour l'air (28) en plusieurs segments de passage pour l'air comprenant un segment de passage pour l'air en amont et un segment de passage pour l'air en aval ; dans lequel le dispositif (34) faisant office de clapet antiretour possède une dimension externe et une configuration telles qu'il peut être activé pour occuper essentiellement le passage pour l'air (28) ; dans lequel le dispositif (34) faisant office de clapet antiretour possède un corps de soupape (46) qui peut être activé dans une position ouverte pour permettre à de l'air mis sous pression de passer de manière dirigée à travers le corps du clapet antiretour à partir du segment de passage pour l'air en amont jusqu'au segment de passage pour l'air en aval et qui peut être activé dans une position fermée pour empêcher l'air de passer à travers le corps du clapet antiretour à partir du segment de passage pour l'air en aval jusqu'au segment de passage pour l'air en amont ; et dans lequel le bandage pneumatique (10) est configuré d'une manière telle qu'un flux d'air mis sous pression à travers le dispositif (34) faisant office de clapet antiretour s'étend dans une direction axiale le long du passage pour l'air (28) à partir d'un site d'entrée (30) du passage allongé pour l'air (28) en direction d'un site de sortie (32) du passage pour l'air (28) ; **caractérisé en ce que** chaque dispositif (34) faisant office de clapet antiretour comprend un corps tubulaire (36) logé étroitement au sein du passage pour l'air (28) en ajustement serré, les parois latérales du passage qui définissent le passage pour l'air (28) entrant en contact opérationnel avec le corps tubulaire (36) et exerçant une force de compression en direction radiale sur le corps en question afin de maintenir le corps tubulaire (36) à sa place au sein du passage pour l'air (28).

2. Bandage pneumatique selon la revendication 1, comprenant plusieurs dispositifs (34) faisant office de clapets antiretour qui sont espacés les uns des autres le long du passage pour l'air (28) et qui divisent le passage pour l'air en plusieurs segments de passage pour l'air ; dans lequel chaque dispositif (34) faisant office de clapet antiretour est configuré pour s'ouvrir de manière fonctionnelle en direction du site de sortie à partir de l'intérieur du passage pour l'air (28) pour permettre à de l'air mis sous pression de s'écouler de manière dirigée à partir du site d'entrée (30) jusqu'au site de sortie (32).

3. Bandage pneumatique selon la revendication 1 ou 2, dans lequel le passage pour l'air comprend un passage interne axial d'un tube flexible allongé pour l'air (26) fixé dans une rainure au sein d'un flanc (16, 18) du bandage pneumatique.

4. Bandage pneumatique selon la revendication 1, dans lequel le corps tubulaire (36) comprend au moins une barbe de rétention (40) orientée vers l'extérieur qui entre en contact avec une paroi latérale du passage pour l'air afin de maintenir le corps tubulaire (36) à sa place au sein du passage pour l'air (28).

5. Bandage pneumatique selon la revendication 1, dans lequel un élément (42) faisant office de membrane flexible est logé au sein du corps tubulaire (36), qui s'ouvre de manière opérationnelle le long d'une fente (48) pour admettre de l'air mis sous pression à partir d'un côté de l'élément (42) faisant office de membrane à travers l'élément (42) faisant office de membrane.

6. Bandage pneumatique selon au moins une des revendications précédentes, dans lequel le passage pour l'air (28) comprend un passage axial à travers un tube pour l'air (26) qui se compose d'un matériau flexible, le tube pour l'air (26) s'étendant en continu entre le site d'entrée et le site de sortie (30, 32) et/ou dans lequel le passage pour l'air comprend un tube flexible allongé pour l'air du type à segments multiples, formé à partir de plusieurs segments tubulaires pour l'air ; et dans lequel au moins un dispositif (34) faisant office de clapet antiretour est disposé entre des extrémités opposées et vient se relier, auxdites extrémités, à partir de l'intérieur du passage pour l'air (28), à une paire adjacente des segments tubulaires pour l'air.

7. Bandage pneumatique selon au moins une des revendications précédentes, dans lequel le passage pour l'air (28) comprend un passage axial à travers un tube allongé pour l'air (26) qui se compose d'un matériau flexible, le tube pour l'air (26) s'étendant en continu entre le site d'entrée et le site de sortie (30, 32) ; et dans lequel le bandage pneumatique (10) comprend en outre un collier de serrage (58) fixé l'extérieur du tube pour l'air (26) par-dessus l'endroit occupé par ledit dispositif (34) faisant office de clapet antiretour au sein du passage tubulaire allongé pour l'air (28).

8. Bandage pneumatique selon au moins une des revendications précédentes, dans lequel les dispositifs (3, 4) faisant office de clapets antiretour sont espacés à des intervalles essentiellement équidistants le long du passage pour l'air (28) ; et/ou dans lequel le passage pour l'air (28) s'étend essentiellement en suivant une voie de configuration arquée de 180° le long dudit flanc (16, 18) du bandage pneumatique ou en suivant une voie circulaire de 360° qui circonscrit ledit flanc (16, 18) du bandage pneumatique.

9. Procédé de montage d'une pompe pour l'air pour un bandage pneumatique (10), le procédé comprenant le fait de :
(A) ouvrir un passage axial pour l'air (28) d'un tube flexible allongé pour l'air (26) à une extrémité ;
(B) insérer au moins un clapet antiretour unidirectionnel (34) dans le passage pour l'air (28) à partir de ladite extrémité, ledit clapet antiretour (34) possédant une largeur nominale externe supérieure à une largeur nominale interne du passage tubulaire pour l'air (28) ;
(C) établir un contact par ajustement serré entre ledit au moins un dispositif (34) faisant office de clapet antiretour et les parois latérales internes du tube pour l'air définissant le passage pour l'air (28) afin de mettre le clapet antiretour (34) en place au sein du passage pour l'air ;
(D) maintenir ledit clapet antiretour (34) en place au sein du passage pour l'air (28) via une pression radiale exercée par les parois internes du tube pour l'air ; et
(E) fermer ladite extrémité du tube flexible pour l'air (26).

10. Procédé selon la revendication 9, dans lequel :
l'étape (B) comprend le fait d'insérer un par un plusieurs clapets antiretour unidirectionnels (34) dans le passage pour l'air (28) à partir de ladite extrémité afin d'obtenir un jeu axial de clapets antiretour espacés les uns des autres le long du passage pour l'air, chaque clapet antiretour (34) possédant une largeur nominale externe supérieure à une largeur nominale du passage tubulaire pour l'air ;
l'étape (C) comprend le fait d'établir un contact du type à ajustement serré entre chaque clapet antiretour (34) et les parois latérales internes du tube pour l'air définissant le passage pour l'air (28) afin de mettre chaque clapet antiretour (34) à sa place respective au sein du passage pour l'air (28) ; et
l'étape (D) comprend le fait de maintenir les clapets antiretour (34) à leur place respective au sein du passage pour l'air via une pression radiale exercée par les parois latérales internes du tube pour l'air.

11. Procédé selon la revendication 9 ou 10 comprenant en outre le fait de répéter les étapes (B), (C) et (D) pour chacun desdits plusieurs clapets antiretour unidirectionnels (34) avant la fermeture de ladite extrémité, lesdits plusieurs clapets antiretour (34) étant insérés de manière séquentielle pour obtenir un jeu de clapets antiretour espacés les uns des autres en direction axiale le long du passage pour l'air (28), chacun des clapets antiretour (34) se retrouvant à une place respective au sein du passage pour l'air (28).

12. Procédé selon la revendication 9, 10 ou 11 comprenant en outre le fait d'élargir le tube flexible pour l'air (26) en direction diamétrale à partir d'un diamètre non élargi jusqu'à un diamètre élargi avant de procéder à l'insertion de chacun desdits plusieurs clapets antiretour (34) dans le passage pour l'air (28) à partir de ladite extrémité du tube pour l'air, et le fait d'affaisser le tube flexible pour l'air (26) en direction diamétrale par-dessus chacun des clapets antiretour (34) pour obtenir le diamètre non élargi après avoir mis le clapet antiretour à sa place respective.

13. Procédé selon au moins une des revendications 9 à 12, comprenant en outre le fait de resserrer le tube pour l'air (26) dans le but d'obtenir un diamètre non élargi de manière séquentielle aux emplacements respectifs des clapets antiretour (34) avant de procéder à l'insertion de chacun desdits plusieurs clapets antiretour (34) dans le passage pour l'air (28) à partir de ladite extrémité du tube pour l'air ; et/ou comprenant en outre le fait de déployer le tube flexible allongé pour l'air (26) contenant le jeu de clapets antiretour dans une zone de flexion d'une paroi du bandage pneumatique, le passage pour l'air (28) se fermant de manière opérationnelle, segment par segment, en réaction à des forces exercées à partir de la zone de flexion du bandage pneumatique lorsque la zone de flexion de la paroi du bandage pneumatique tourne à l'opposé d'une empreinte du bandage pneumatique en train de rouler.

14. Procédé selon au moins une des revendications 9 à 13, comprenant en outre le fait de :
déployer un site d'entrée pour l'air (30) communiquant avec le passage pour l'air (28), qui peut être activé pour admettre de l'air dans le passage pour l'air ; et
déployer un site de sortie (32) communiquant avec le passage pour l'air (28) espacé du site d'entrée, qui peut être activé pour prélever de l'air mis sous pression à partir du passage pour l'air.
